# EUROPÄISCHE PATENTSCHRIFT

(11) **EP 4 185 471 B1**
(45) Veröffentlichungstag und Bekanntmachung des Hinweises auf die Patenterteilung: **20.11.2024**
(21) Anmeldenummer: 21746640.8
(22) Anmeldetag: 14.07.2021
(51) Int. Cl.: B60C 15/06, B60C 9/06, B60C 9/18

(54) **ZWEIRADLUFTREIFEN**
PNEUMATIC TYRE FOR BICYCLE
PNEUMATIQUE POUR BICYCLETTE

(30) Priorität: 24.07.2020 DE 202020104281 U
(43) Veröffentlichungstag der Anmeldung: 31.05.2023
(73) Patentinhaber: Continental Reifen Deutschland GmbH, 30175 Hannover (DE)
(72) Erfinder: LENGEMANN, Daniel, 30165 Hannover (DE); DREWS, Waldemar, 30165 Hannover (DE)
(74) Vertreter: Continental Corporation
(86) Internationale Anmeldenummer: PCT/DE2021/200093
(87) Internationale Veröffentlichungsnummer: WO 2022/017567

(56) Entgegenhaltungen:
- WO-A1-2019/025953
- DE-A1- 102014 214 892
- DE-A1- 19 909 648
- DE-U1- 202012 007 834
- DE-U1- 202015 000 366

## Beschreibung

Die Erfindung betrifft einen Zweiradluftreifen, bevorzugt Fahrradreifen, besonders bevorzugt Rennradreifen, mit einem Laufstreifen, einer Reifenkarkasse, Reifenseitenwänden und zwei Wulstbereichen mit je einem Reifenwulst mit einem Kern, wobei die Reifenkarkasse zwei Karkasseinlagen umfasst, wobei die zwei Karkasseinlagen jeweils einzelne parallel zueinander verlaufende Festigkeitsträger aufweisen, wobei die Festigkeitsträger in einem Winkel zur Umlaufrichtung U von 40 Grad bis 60 Grad angeordnet sind und die Festigkeitsträger der beiden Karkasseinlagen einen gegenläufigen Steigungswinkel aufweisen, wobei beide Karkasseinlagen von einem Zenitbereich des Zweiradluftreifens über die Reifenseitenwände bis in beide Wulstbereiche reichen und dort um den jeweiligen Kern von axial innen nach axial außen herumgeschlagen sind und mit Karkasseinlagenenden aufweisend Festigkeitsträgerenden der Karkasseinlage enden und wobei die zwei Wulstbereiche als Anscheuerschutz jeweils ein von außen auf der Karkasse angeordnetes Wulstschutzband aufweisen. Die Erfindung betrifft weiter ein Zweirad aufweisend einen solchen Reifen.

Herkömmliche Zweiradluftreifen, bevorzugt Fahrradreifen, besonders bevorzugt Rennradreifen, sind auf Rollwiderstand, Pannenschutz und Laufleistung ausgelegt und optimiert. Rennradreifen zeichnen sich oftmals dadurch aus, dass der Karkasshochschlag der beiden Reifenhälften unterhalb des Laufstreifens überlappend angeordnet ist. Dadurch liegen bei einer einlagigen Karkasse im Zenit des Reifens radial innerhalb des Laufstreifens drei Lagen der Karkasseinlage übereinander. Dies führt im Betrieb des Reifens zu starken Reibungskräften zwischen den drei übereinander angeordneten Karkasseinlagen, was sich negativ auf den Rollwiderstand auswirkt.

Zudem besteht eine für die Luftdichtheit des Reifens unvorteilhafte Gewebeverbindung zwischen dem Reifeninnenraum und dem Reifenaußenraum.

Eine vorteilhafte Reduktion der Lagenstärke im Zenitbereich auf zwei Lagen ist in der EP3174738 A1 offenbart. Hier ist ein Rennradreifen aufweisend eine Karkasse gebildet aus zwei übereinander angeordneten Karkasseinlagen, wobei die zwei Karkasseinlagen um den Kern herumgeschlagen sind, die hochgeschlagenen Karkasseinlagen die Seitenwand teilweise abdecken und die Karkasseinlagenenden radial zwischen den seitlichen Randbereichen des Laufstreifens und einem Nesselband enden. Ein solcher Reifen weist jedoch in zumindest einen Teil der Seitenwand eine Verstärkung durch vier Lagenstärken der Karkasse auf, wodurch im Bereich der Seitenwand die Reibung zwischen den Karkasseinlagen sowie der Einsatz an Karkassmaterial erhöht ist, was sich negativ auf das Gewicht und den Rollwiderstand auswirkt. Wie bei der erwähnten einlagigen Konstruktion besteht auch bei dieser Reifenkonstruktion eine für die Luftdichtheit des Reifens unvorteilhafte Gewebeverbindung zwischen dem Reifeninnenraum und dem Reifenaußenraum.

Ein gattungsgemäßer Zweiradluftreifen ist aus der WO 2019/025953 A1 bekannt. Weitere Zweiradluftreifen werden in der DE 20 2015 000366 U1 sowie in der DE 20 2012 007834 U1 offenbart.

Die Entwicklung geht dahin, bei Zweiradluftreifen, bevorzugt bei Fahrradreifen, besonders bevorzugt bei Rennradreifen, den Rollwiderstand zu verbessern. Für Rennradreifen ist dabei ein geringer Rollwiderstand von fundamentaler Bedeutung. Der Erfindung liegt die Aufgabe zu Grunde, einen Zweiradluftreifen, bevorzugt einen Fahrradreifen, besonders bevorzugt einen Rennradreifen zu schaffen, bei dem der Rollwiderstand verbessert ist.

Gelöst wird die Aufgabe in Bezug auf den Zweiradreifen dadurch, dass die Karkasseinlagenenden der inneren Karkasseinlage vom jeweiligen Wulstschutzband von außen abgedeckt sind, wobei die innere Karkasseinlage durch die im Zenitbereich radial innere Karkasseinlage der beiden Karkasseinlagen gebildet ist.

Ein Vorteil des erfindungsgemäßen Zweiradluftreifens, bevorzugt des Fahrradreifens, besonders bevorzugt des Rennradreifens, ist insbesondere darin zu sehen, dass durch die neue Reifenkonstruktion der Rollwiderstand wesentlich verbessert wird.

Erfindungswesentlich ist, dass die Karkasseinlagenenden so angeordnet sind, dass sie vom jeweiligen Wulstschutzband von außen abgedeckt sind. Die Karkasseinlagenenden und somit die Festigkeitsträgerenden der inneren Karkasseinlage sind somit zwischen dem Wulstschutzband und der äußeren Karkasseinlage angeordnet, wobei zwischen den Festigkeitsträgerenden des Karkasseinlagenendes und dem Wulstschutzband eine Gummierung der inneren Karkasseinlage angeordnet sein kann. Eine senkrecht zum Wulstschutzband ausgerichtete Gerade kann das Wulstschutzband und das Karkasseinlagenende verbinden.

Die innere Karkasseinlage ist dabei durch die im Zenitbereich radial innere Karkasseinlage der beiden Karkasseinlagen gebildet. Die äußere Karkasseinlage ist dabei durch die im Zenitbereich radial äußere Karkasseinlage der beiden Karkasseinlagen gebildet.

Der Zweiradluftreifen ermöglicht somit die Vorteile einer Karkasse mit zwei zumindest vollen Karkasseinlagen bei einer gleichzeitig reduzierten Lagenstärke durch die Karkasshochschläge der beiden Karkasseinlagen in dem von radial außen an den Wulststreifen anschließenden Bereich der Seitenwand. Es ist die Lagenstärke der Karkasse somit in der Seitenwand insbesondere in einem Bereich reduziert, der im Betrieb des Reifens durch zyklische Deformationen besonders beansprucht ist. Somit ist die Anzahl der in diesem Bereich aufeinanderliegenden Lagen der zwei Karkasseinlagen, zwischen denen Reibungsverluste den Rollwiderstand verringern, reduziert. Weiter ist der Materialeinsatz für die innere Karkasseinlage und damit das Gewicht der Karkasse vorteilhaft reduziert.

Es hat sich herausgestellt, dass ein Zweiradreifen, bevorzugt ein Fahrradreifen, besonders bevorzugt ein Rennradreifen, aufweisend die neue Konstruktion einen besonders geringen Rollwiderstand aufweist.

Das Wulstschutzband dient wie üblich als Anscheuerungsschutz gegenüber einem Felgenhorn im Betrieb des Reifens und vermindert so ein Freilegen der Karkassfäden. Das Wulstschutzband kann eine als Anlagefläche zur Felge ausgelegte Außenfläche des Wulstbereichs mitbilden oder bilden.

Die neue Konstruktion schützt durch die zwei herumgeschlagenen Karkasseinlagen den Kern weiterhin besonders gut vor Beschädigung.

Im Folgenden werden vorteilhafte Weiterbildungen der Erfindung erläutert. Entsprechende Vorteile ergeben sich auch für ein Zweirad aufweisend einen solchen Reifen.

In einer vorteilhaften Weiterbildung der Erfindung ist vorgesehen, dass das Wulstschutzband in einem radial äußeren Ende in einer ersten Höhe von maximal 15 mm, bevorzugt von 10 mm bis 12 mm, endet, gemessen relativ zu einem äußersten Umschlagpunkt der um den Kern herumgeschlagenen Festigkeitsträger der inneren Karkasseinlage.

Durch diese niedrige Anordnung sowohl des Wulstschutzbandes als auch der Karkasseinlagenenden der inneren Karkasseinlage sind die Karkasshochschläge der inneren Karkasseinlage somit vorrangig in einem Bereich angeordnet, der im Betrieb des Reifens kaum oder keine zyklische Deformation erfährt. Somit ist der Energieverlust durch Reibung des Karkasshochschlags der inneren Karkasseinlage weiter reduzierbar. Ebenso ist der Materialeinsatz für das Wulstschutzband sowie für die innere Karkasseinlage, und damit das Gewicht des Reifens, vorteilhaft reduziert.

Zur Ermittlung der ersten Höhe kann der Zweiradluftreifen in seinem Querschnitt so aufgebogen sein, dass die beiden Karkasseinlagen vom Zenit her kommend im Bereich der Seitenwand weitgehend geradlinig angeordnet sind und in eine bezüglich des Kerns weitgehend symmetrische Umschlingung des Kerns übergehen. In dieser Anordnung ist die erste Höhe des radial äußeren Endes des Wulstschutzbandes gemessen relativ zum äußersten Umschlagpunkt einer Außenkante der um den Kern herumgeschlagenen Festigkeitsträger der inneren Karkasseinlage, gemessen parallel zu den weitgehend geradlinig angeordneten Karkasseinlagen.

Weist das Wulstschutzband Fasern, insbesondere ein Gewebe auf, so geben die Fasern, insbesondere die Gewebekante des Gewebes, das radial äußere Ende des Wulstschutzbandes vor.

In einer weiteren vorteilhaften Weiterbildung der Erfindung ist vorgesehen, dass die Karasseinlagenenden der inneren Karkasseinlage in einer zweiten Höhe von maximal 13 mm, bevorzugt von 8 mm bis 10 mm, angeordnet sind, gemessen relativ zu einem äußersten Umschlagpunkt der um den Kern herumgeschlagenen Festigkeitsträger der inneren Karkasseinlage.

Die Karkasseinlagenenden der inneren Karkasseinlage sind somit vorrangig in einem Bereich angeordnet, der im Betrieb des Reifens kaum oder keine zyklische Deformation erfährt. Somit ist der Energieverlust durch Reibung des Karkasshochschlags der inneren Karkasseinlage weiter reduziert. Weiter ist der Materialeinsatz für die innere Karkasseinlage und damit das Gewicht der Karkasse vorteilhaft reduziert.

Zur Ermittlung der zweiten Höhe kann der Zweiradluftreifen in seinem Querschnitt so aufgebogen sein, dass die beiden Karkasseinlagen vom Zenit her kommend im Bereich der Seitenwand weitgehend geradlinig angeordnet sind und in eine bezüglich des Kerns weitgehend symmetrische Umschlingung des Kerns übergehen. In dieser Anordnung ist die zweite Höhe der Karkasseinlagenenden gemessen relativ zum äußersten Umschlagpunkt einer Außenkante der um den Kern herumgeschlagenen Festigkeitsträger der inneren Karkasseinlage parallel zu den weitgehend geradlinig angeordneten Karkasseinlagen.

Entsprechende Vorteile ergeben sich, wenn die Karasseinlagenenden der inneren Karkasseinlage im Wulstbereich, insbesondere vom Kern herkommend vor der Seitenwand, enden.

In einer weiteren vorteilhaften Weiterbildung der Erfindung ist vorgesehen, dass das Wulstschutzband als gummiertes Band aufweisend Fasern, insbesondere als gummiertes Gewebeband, ausgeführt ist.

Ein weiterer Vorteil der neuen Konstruktion besteht darin, dass es durch die Abdeckung der Karkasseinlagenenden der inneren Karkasseinlage durch das Wulstschutzband keine direkte Verbindung des Reifeninnenraums mit dem Reifenaußenraum durch eine Karkasseinlage gegeben ist. Ebenso sind mit den Karkasseinlagenenden die dort endenden Festigkeitsträger der Karkasseinlage mit dem Wulstschutzband von außen abgedeckt. Hierdurch ist ein Abblasen von Luft aus dem Reifeninnenraum durch die beiden Karkasseinlagen, insbesondere im schlauchlosen Betrieb, vermieden bzw. stark reduziert, wodurch die Luftdichtigkeit des Reifens im schlauchlosen Betrieb auf einfache Art und Weise stark verbessert ist.

Die Fasern des gummierten Bandes können zu einem Gewebe gewirkt sein. Es kann sich um ein Nesselgewebe oder ein Nylongewebe, handeln.

In einer weiteren vorteilhaften Weiterbildung der Erfindung ist vorgesehen, dass das Wulstschutzband frei ist von miteinander verdrillten Fasern aufweisenden Fäden, die ein radial äußeres Ende des Wulstschutzbandes und ein inneres Ende des Wulstschutzbandes verbinden.

Bei Fäden aufweisend verdrillte Fasern, wobei die Fäden das radial äußere Ende des Wulstschutzbandes und das innere Ende des Wulstschutzbandes miteinander verbinden, kann durch Mikrokanäle ein Abblasen der Luft aus einem Reifeninnenraum erfolgen. Dies wirkt sich negativ auf die Luftdichtigkeit bei einem schlauchlosen Betrieb des Reifens aus. Ein Fehlen derartig angeordneter und ausgebildeter Fäden trägt somit zur Luftdichtigkeit zwischen Reifen und Felge beim montierten Reifen im schlauchlosen Betrieb vorteilhaft bei.

Entsprechende Vorteile ergeben sich insbesondere für ein Zweirad aufweisend einen solchen Reifen im schlauchlosen Betrieb.

In einer weiteren vorteilhaften Weiterbildung der Erfindung ist vorgesehen, dass das Wulstschutzband als gummiertes Monofilamentgewebe ausgeführt ist.

Das gummierte Monofilamentgewebe vermindert das Entweichen von Luft an der Kontaktfläche zwischen Reifen und Felge besonders wirksam, insbesondere wirksamer als ein übliches Wulstschutzband mit einem Gewebe mit Fäden aus mehreren miteinander verdrillten Fasern. Grund hierfür ist, dass die Monofilamente weitgehend einzeln in der Gummierung eingebettet sind und somit ein Abblasen der Luft aus dem Reifeninnenraum zum Reifenaußenraum mittels Mikrokanälen zwischen den Fasern der Fäden des Wulstschutzbandes weitgehend vermieden ist.

Hierdurch ist eine besonders gute Luftdichtigkeit des auf der Felge montierten Reifens ermöglicht. Entsprechende Vorteile ergeben sich insbesondere für ein Zweirad aufweisend einen solchen Reifen im schlauchlosen Betrieb.

Ein Betrieb des Reifens ohne Schlauch kann somit ohne weitere aufwändige, oftmals den Rollwiderstand verschlechternden Maßnahmen, wie z.B. einem Innerliner, ermöglicht sein.

In einer weiteren vorteilhaften Weiterbildung der Erfindung ist vorgesehen, dass die Karkasse in direktem Kontakt zum Reifeninnenraum steht.

Der Zweiradreifen, bevorzugt der Fahrradreifen, besonders bevorzugt der Rennradreifen, ist insbesondere frei von einem weitgehend luftdicht ausgeführten Innerliner, der zwischen Karkasse und Reifeninnenraum angeordnet ist. Hierdurch ist ein besonders leichter Reifen und damit ein vorteilhafter Rollwiderstand ermöglicht. Für einen schlauchlosen Betrieb, insbesondere als "Tubeless Ready" Fahrradreifen, kann eine ausreichende Luftdichtigkeit durch die beschriebenen Maßnahmen, insbesondere die Ausführung eines als gummiertes Monofilamentgewebe ausgeführtes Wulstschutzbandes, gewährleistet sein.

Entsprechende Vorteile ergeben sich insbesondere für ein Zweirad aufweisend einen solchen Reifen im schlauchlosen Betrieb.

In einer weiteren vorteilhaften Weiterbildung der Erfindung ist vorgesehen, dass es sich um einen Schlauchlosreifen, insbesondere einen "tubeless" Reifen oder einen "Tubeless Ready" Reifen, handelt.

Schlauchlosreifen für einen schlauchlosen Betrieb des Zweiradluftreifens, bevorzugt des Fahrradreifens, bevorzugt des Rennradreifens, stellen eine erhöhte Anforderung an die Luftdichtigkeit sowohl des Reifens an sich als auch der Abdichtung an der Kontaktfläche zwischen Reifen und Felge. Im schlauchlosen Betrieb des Reifens entfallen Reibungsverluste zwischen Schlauch und Reifen, so dass der Reifen einen vorteilhaften Rollwiderstand ermöglicht. Ebenfalls entfallen schlauchbasierte Pannengründe.

Beim Betrieb eines Reifens für den schlauchlosen Betrieb kann der Einsatz einer Dichtflüssigkeit, insbesondere einer Dichtmilch, die in den Reifeninnenraum zwischen Reifen und Felge verfüllt ist, die Dichtheit verbessern.

Ein Zweiradluftreifen, insbesondere ein Rennradreifen, für schlauchlosen Betrieb kann ein sogenannter "Tubeless" Reifen sein, der vorrangig oder ausschließlich für den Betrieb ohne Schlauch geeignet ist. Ein Tubeless Reifen kann oftmals auch ohne Dichtmilch gefahren werden.

Es kann sich auch um einen sogenannten "Tubeless Ready" Reifen handeln, der sowohl für den Betrieb mit als auch für den Betrieb ohne Schlauch geeignet ist. In der Regel wird ein Tubeless Ready Reifen im schlauchlosen Betrieb mit einer Dichtflüssigkeit, insbesondere einer Dichtmilch, gefahren. Reifen und Felge können dabei so konstruiert sein, dass sie direkt aneinander abdichten.

In einer weiteren vorteilhaften Weiterbildung der Erfindung ist vorgesehen, dass es sich um einen Fahrradreifen für einen Betrieb mit Schlauch, insbesondere um einen Clincher-Reifen, handelt.

Bei einem Reifen im Betrieb mit Schlauch wird der Luftdruck über einen im Reifeninnenraum zwischen Reifen und Felge angeordneten weitgehend luftdicht ausgeführten Schlauch gehalten. Auch hierbei ermöglicht die neue Reifenkonstruktion einen vorteilhaft reduzierten Rollwiderstand.

Ein sogenannter Clincher-Reifen ist in der Regel ein Drahtreifen bzw. ein Faltreifen. Der Reifen besitzt dann einen Drahtkern bzw. einen Faltkern und wird mit dem Wulst am Felgenhorn der Felge eingehängt. Ein Clincher-Reifen ist mit einfachen Mitteln montierbar und demontierbar. Im Pannenfall kann somit der Schaden einfach behoben werden.

In einer weiteren vorteilhaften Weiterbildung der Erfindung ist vorgesehen, dass zumindest in einem Bereich der Seitenwand die beiden Karkasseinlagen die einzigen Festigkeitsträger aufweisenden Einlagen sind.

Durch den Verzicht auf eine weitere Festigkeitsträger aufweisende Einlage ist eine besonders dünne und somit leichte und rollwiderstandsoptimierte Seitenwand ermöglicht. Die im Bereich der Seitenwand zumindest zweilagige Karkasse ermöglicht bereits eine ausreichende Festigkeit und bietet durch die zweilagige Konstruktion eine insbesondere für Fahrradreifen ausreichende Schnittfestigkeit.

In einer weiteren vorteilhaften Weiterbildung der Erfindung ist vorgesehen, dass die Karkasseinlagenenden der äußeren Karkasseinlage der beiden Karkasseinlagen können von der inneren Karkasseinlage oder vom Wulstschutzband von außen abgedeckt sein.

Die äußere Karkasseinlage ist dabei im Zenitbereich die äußere der beiden Karkasseinlagen.

Hierdurch ist eine weitere Reduktion der Lagenstärke der Karkasse radial außerhalb des Wulstschutzbandes auf nur zwei Lagen ermöglicht. Der Rollwiderstand ist durch den geringeren Reibungsverlust sowie die Materialreduktion weiter verringerbar. Zudem ist im Zenitbereich des Reifens ist eine nur zweilagige Karkasseinlagenstärke ermöglicht, bei der die Reifenkarkasse unterhalb des Laufstreifens eine hohe Elastizität aufweist und die Reibungsverluste zwischen den Karkasseinlagen gering sind.

In einer weiteren vorteilhaften Weiterbildung der Erfindung ist vorgesehen, dass zwischen dem Laufstreifen und der Reifenkarkasse eine dämpfende Gummieinlage aus einem hochelastischen Kautschuk angeordnet ist, wobei die dämpfende Gummieinlage insbesondere eine Materialdicke zwischen 0,2 mm und 1 mm aufweist.

Hierdurch ist durch eine Entkopplung der Gewebelagen ein höherer Fahrkomfort sowie ein besserer Rollwiderstand ermöglicht. Durch die spezielle Materialdicke der dämpfenden Gummieinlage wird der Fahrkomfort des Fahrradreifens wesentlich verbessert, da sich der Fahrradreifen insgesamt besser dem Fahrbahnuntergrund anpassen kann.

Bevorzugt kann die dämpfende Gummieinlage aus einem hochelastischen Kautschuk mit einem Rebound-Materialwert zwischen 70 und 80 bestehen. Bei diesem Rebound-Materialwert wird ein optimaler Fahrkomfort erzielt, wobei gleichzeitig der Rollwiderstand des Fahrradreifens nicht erhöht wird.

In einer weiteren vorteilhaften Weiterbildung der Erfindung ist vorgesehen, dass zwischen dem Laufstreifen und der Reifenkarkasse eine Schutzlage aufweisend ein insbesondere reißfestes Gewebe, bevorzugt ein Gewebe aufweisend Fasern aus Polyethylenterephthalat - Polyacrylat, angeordnet ist.

Die Schutzlage gewährleistet einen optimalen Pannenschutz für den Zweiradluftreifen, bevorzugt den Fahrradreifen, besonders bevorzugt den Rennradreifen. Bei dem Gewebe aufweisend Fasern aus Polyethylenterephthalat - Polyacrylat kann es sich um ein Gewebe handeln, das Vectranfasern aufweist oder daraus besteht.

In einer weiteren vorteilhaften Weiterbildung der Erfindung ist vorgesehen, dass die Festigkeitsträger in einem Winkel zur Umlaufrichtung U von 42 Grad bis 48 Grad, bevorzugt von 43 Grad bis 48 Grad, angeordnet sind. Hierdurch ergibt sich eine besonders vorteilhafte Diagonalkarkasse.

In einer weiteren vorteilhaften Weiterbildung der Erfindung ist vorgesehen, dass die beiden Karkasseinlagen die einzigen Karkasseinlagen der Karkasse sind. Hierdurch ist eine genau zweilagige Karkasslage mit geringem Materialeinsatz ermöglicht.

In einer weiteren vorteilhaften Weiterbildung der Erfindung ist vorgesehen, dass es sich um einen Fahrradreifen, insbesondere einen Rennradreifen, einen Mountain-Bike Reifen oder einen Reifen für ein Fahrrad aufweisend einen Elektromotor zum Antrieb des Fahrrads, handelt.

Die neue Reifenkonstruktion ist bei Fahrradreifen besonders vorteilhaft.

Die neue Reifenkonstruktion lässt sich bei Rennradreifen besonders vorteilhaft einsetzen, da der Rollwiderstand wesentlich verringert wird. Ein Rennradreifen weist in der Regel eine maximale Reifenbreite von 35 mm auf und zeigt eine rennradspezifische geringe Profilierung des Laufstreifens.

Die neue Reifenkonstruktion, insbesondere für Schlauchlosreifen, eignet sich auch hervorragend für Mountain-Bike Reifen. Mountain-Bike Reifen weisen in der Regel eine Mindestreifenbreite von 35 mm, insbesondere 40 mm, sowie oftmals eine ausgeprägte Profilierung des Laufstreifens auf. Auch bei Mountain-Bike Reifen gewinnen Aspekte wie der Rollwiderstand einen immer höheren Stellenwert. Insbesondere kann ein schlauchloser Betrieb des Reifens von Vorteil sein, da sich dann die Pannenanfälligkeit verringert und ein solcher Reifen mit vergleichsweise niedrigerem Luftdruck gefahren werden kann.

Die neue Reifenkonstruktion eignet sich hervorragend auch für den Einsatz an Fahrrädern aufweisend einen Elektromotor zum Antrieb des Fahrrads. Bei einem solchen Einsatz ist ein geringer Rollwiderstand vorteilhaft, da er die Reichweite des Fahrrades erhöht.

Es kann es sich dabei um einen Reifen für ein Elektrofahrrad handeln. Ein Reifen für ein Elektrofahrrad kann die Prüfnorm "ECE-R75" erfüllen. Die Eignung für ein Elektrofahrrad ist oftmals durch die Bezeichnung "E-bike ready 50" gekennzeichnet.

Es kann sich dabei auch um einen Reifen für ein Pedelec handeln, bei welchem der Antrieb zumindest teilweise von dem Elektromotor unterstützt ist, handeln. Die Eignung für ein Pedelec ist oftmals durch die Bezeichnung "E-bike ready 25" gekennzeichnet.

Die neue Reifenkonstruktion eignet sich für den Einsatz in allen Fahrradsegmenten.

In einer weiteren vorteilhaften Weiterbildung der Erfindung ist vorgesehen, dass es sich um einen Motorradreifen, insbesondere um einen Elektroscooterreifen, handelt.

Auch ein Motorradreifen oder ein Elektrosocooterreifen aufweisend die neue Konstruktion kann über den vorteilhaften Rollwiderstand zu einer verbesserten Reichweite des Fahrzeuges beitragen.

Bezüglich des Zweirades wird die Aufgabe dadurch gelöst, dass das Zweirad einen erfindungsgemäßen Reifen aufweist.

In einer vorteilhaften Weiterbildung der Erfindung ist vorgesehen, dass es sich bei dem Zweirad um ein Fahrrad, insbesondere um ein Rennrad oder um ein Mountain-Bike oder um ein Fahrrad aufweisend einen Elektromotor zum Antrieb des Fahrrads, insbesondere um ein Rennrad oder um ein Mountain-Bike, handelt.

Ein derartiges Zweirad kann mit einem besonders vorteilhaften Rollwiderstand betrieben werden.

In einer vorteilhaften Weiterbildung der Erfindung ist vorgesehen, dass ein von einer Felge und dem Reifen eingeschlossener Reifeninnenraum frei von einem Schlauch ist.

Das Zweirad weist somit einen schlauchlosen Reifen auf und wird im schlauchlosen Betrieb betrieben. Im schlauchlosen Betrieb des Reifens entfallen Reibungsverluste zwischen Schlauch und Reifen, so dass der Reifen einen vorteilhaften Rollwiderstand ermöglicht. Ebenfalls entfallen schlauchbasierte Pannengründe.

Für den schlauchlosen Betrieb muss sowohl der Reifen an sich als auch der Kontaktbereich zwischen Reifen und Felge ausreichend luftdicht ausgeführt sein. Dies ist durch den erfindungsgemäßen Reifen ermöglicht.

Beim Betrieb eines Reifens für den schlauchlosen Betrieb kann der Einsatz einer Dichtflüssigkeit, insbesondere einer Dichtmilch, die in den Reifeninnenraum zwischen Reifen und Felge verfüllt ist, die Dichtheit verbessern.

Weitere Merkmale, Vorteile und Einzelheiten der Erfindung werden nun anhand der schematischen Zeichnungen, die Ausführungsbeispiele darstellen, näher erläutert. Dabei zeigt die
- Fig. 1:: einen Zweiradreifens im Querschnitt;
- Fig. 2:: einen Ausschnitt eines Zweiradreifens im Querschnitt.

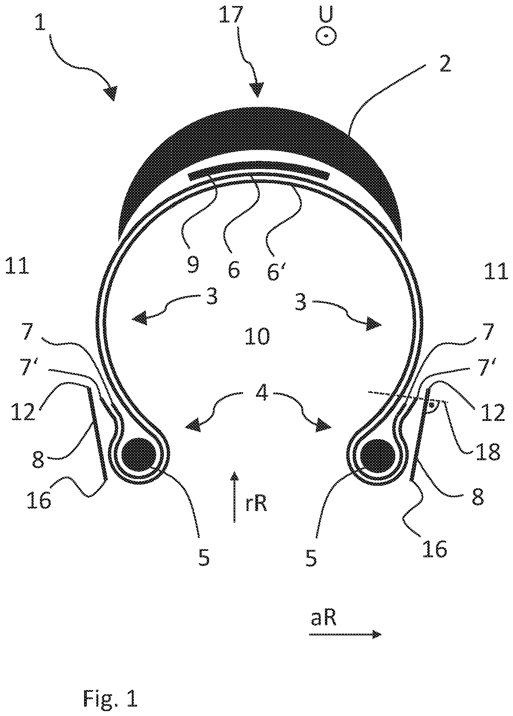

Die Fig. 1 zeigt die wesentlichen Reifenbauteile des Zweiradreifens 1 in einer Querschnittansicht. Es handelt sich um einen Zweiradluftreifen 1, bevorzugt Fahrradreifen, besonders bevorzugt Rennradreifen 1, mit einem Laufstreifen 2, einer Reifenkarkasse, Reifenseitenwänden 3 und zwei Wulstbereichen 4 mit je einem Reifenwulst mit einem Kern 5.

Die Reifenkarkasse umfasst zwei Karkasseinlagen 6,6', wobei die zwei Karkasseinlagen 6,6' jeweils einzelne parallel zueinander verlaufende Festigkeitsträger aufweisen, wobei die Festigkeitsträger in einem Winkel zur Umlaufrichtung U von 40 Grad bis 60 Grad angeordnet sind und die Festigkeitsträger der beiden Karkasseinlagen 6 einen gegenläufigen Steigungswinkel aufweisen und wobei beide Karkasseinlagen 6,6' von einem Zenitbereich 17 des Zweiradluftreifens 1 über die Reifenseitenwände 3 bis in beide Wulstbereiche 4 reichen und dort um den jeweiligen Kern 5 von axial innen nach axial außen herumgeschlagen sind und mit Karkasseinlagenenden 7,7' aufweisend Festigkeitsträgerenden der Karkasseinlage 6,6' enden.

Weiter weisen die zwei Wulstbereiche 4 als Anscheuerschutz jeweils ein von außen auf der Karkasse angeordnetes Wulstschutzband 8 auf.

Der Zweiradreifen zeichnet sich dadurch aus, dass zumindest die Karkasseinlagenenden 7' der inneren Karkasseinlage 6' vom jeweiligen Wulstschutzband 8 von außen bedeckt sind, wobei die innere Karkasseinlage 6' durch die im Zenitbereich 17 radial innere Karkasseinlage der beiden Karkasseinlagen 6,6' gebildet ist. Die äußere Karkasseinlage 6 ist dabei durch die im Zenitbereich radial äußere Karkasseinlage der beiden Karkasseinlagen 6,6' gebildet.

Die Karkasseinlagenenden 7' und somit die Festigkeitsträgerenden der inneren Karkasseinlage 6' sind somit zwischen dem Wulstschutzband 8 und der äußeren Karkasseinlage 6 angeordnet, wobei zwischen den Festigkeitsträgerenden des Karkasseinlagenendes 7' und dem Wulstschutzband 8 eine Gummierung der inneren Karkasseinlage 6' angeordnet sein kann. Eine senkrecht zum Wulstschutzband 8 ausgerichtete Gerade 18 kann das Wulstschutzband 8 und das Karkasseinlagenende 7' verbinden.

Bei Festigkeitsträger aufweisenden gummierten Lagen, insbesondere den Karkasseinlagen 6, 6' und/oder dem Wulstschutzband 8, stellen die dargestellten Linien die Erstreckung der Festigkeitsträger schematisch dar.

Das Wulstschutzband 8 kann in einem radial äußeren Ende 12 in einer ersten Höhe 13 von maximal 15 mm, bevorzugt von 10 mm bis 12 mm, enden, gemessen relativ zu einem äußersten Umschlagpunkt 14 einer Außenkante der um den Kern 5 herumgeschlagenen Festigkeitsträger der inneren Karkasseinlage 6'. Alternativ oder zusätzlich können die Karasseinlagenenden 7' der inneren Karkasseinlage 6' in einer zweiten Höhe 15 von maximal 13 mm, bevorzugt von 8 mm bis 10 mm, angeordnet sein, gemessen relativ zu einem äußersten Umschlagpunkt 14 der um den Kern 5 herumgeschlagenen Festigkeitsträger der inneren Karkasseinlage 6'.

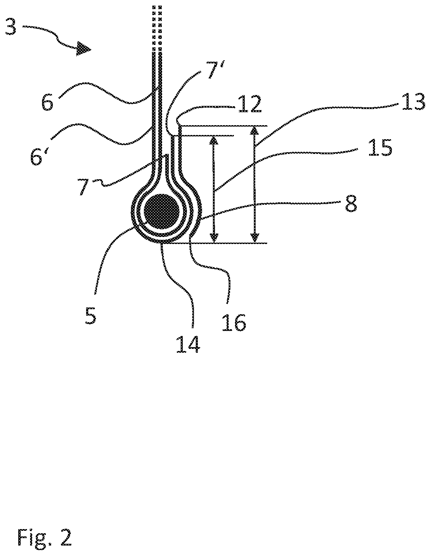

Eine Bemaßung der ersten Höhe 13 und der zweiten Höhe 15 ist in der Fig. 2 verdeutlicht.

Das Wulstschutzband 8 ist als gummiertes Band aufweisend Fasern, insbesondere als gummiertes Gewebeband, ausgeführt. Die Fasern, insbesondere die Gewebekante des Gewebes, geben das radial äußere Ende 12 des Wulstschutzbandes 8 vor.

Die Karasseinlagenenden 7' der inneren Karkasseinlage 6' können im Wulstbereich 4, insbesondere vom Kern 5 herkommend vor der Seitenwand 3, enden.

Insbesondere für einen schlauchlosen Betrieb ist das Wulstschutzband 8 frei von miteinander verdrillten Fasern aufweisenden Fäden, die ein radial äußeres Ende 12 des Wulstschutzbandes 8 und ein inneres Ende 16 des Wulstschutzbandes 8 verbinden. Das Wulstschutzband 8 kann hierfür als gummiertes Monofilamentgewebe ausgeführt sein.

Die Karkasse kann in direktem Kontakt zum Reifeninnenraum 10 stehen.

Zumindest in einem Bereich der Seitenwand 3, insbesondere von radial außen an das Wulstband 8 anschließend, können die beiden Karkasseinlagen 6, 6' die einzigen Festigkeitsträger aufweisenden Einlagen sein.

Die Karkasseinlagenenden 7 der äußeren Karkasseinlage 6 der beiden Karkasseinlagen 6,6' können von der inneren Karkasseinlage 6' oder vom Wulstschutzband 8 von außen bedeckt sein. Die äußere Karkasseinlage 6 ist dabei im Zenitbereich die radial äußere der beiden Karkasseinlagen 6,6'.

Zwischen dem Laufstreifen 2 und der Reifenkarkasse kann eine dämpfende Gummieinlage 9 aus einem hochelastischen Kautschuk angeordnet sein,
wobei die dämpfende Gummieinlage 9 insbesondere eine Materialdicke zwischen 0,2 mm und 1 mm aufweist. Bevorzugt kann die dämpfende Gummieinlage aus einem hochelastischen Kautschuk mit einem Rebound-Materialwert zwischen 70 und 80 bestehen.

Zwischen dem Laufstreifen 2 und der Reifenkarkasse kann eine Schutzlage (nicht dargestellt) aufweisend ein insbesondere reißfestes Gewebe, bevorzugt ein Gewebe aufweisend Fasern aus Polyethylenterephthalat - Polyacrylat, angeordnet sein.

Die Festigkeitsträger der Karkasseinlagen sind bevorzugt in einem Winkel zur Umlaufrichtung U von 42 Grad bis 48 Grad, besonders bevorzugt von 43 Grad bis 48 Grad, angeordnet.

Es kann sich um einen Schlauchlosreifen, insbesondere einen "tubeless" Reifen oder einen "Tubeless Ready" Reifen, handeln. Der Reifen kann für den schlauchlosen Betrieb geeignet und vorgesehen sein und dafür genutzt werden. Der Reifen für den schlauchlosen Betrieb bzw. der Schlauchlosreifen kann insbesondere Bestandteil eines Fahrrades sein, wobei der von einer Felge und dem Reifen 1 eingeschlossene Reifeninnenraum 10 frei von einem Schlauch ist.

Es kann sich um einen Fahrradreifen 1, insbesondere einen Rennradreifen 1, einen Mountain-Bike Reifen oder einen Reifen für Fahrrad aufweisend einen Elektromotor zum Antrieb des Fahrrads, handeln. Der Reifen kann für ein entsprechendes Fahrrad geeignet und vorgesehen sein und dafür genutzt werden. Insbesondere kann ein Fahrrad, insbesondere ein Rennrad, ein Mountain-Bike oder ein Fahrrad aufweisend einen Elektromotor zum Antrieb des Fahrrads, einen derartigen Reifen 1 aufweisen.

Der dargestellte Reifen 1 ist bevorzugt ein Rennradreifen.

Auch ein Reifen für den Betrieb mit Schlauch, insbesondere ein Clincher-Reifen, kann eine entsprechende vorteilhafte Konstruktion aufweisen. Auch Motorradreifen, insbesondere Elektroscooterreifen, können die dargestellte vorteilhafte Konstruktion aufweisen.

Die Fig. 2 verdeutlicht die Bemaßung der ersten Höhe 13 und der zweiten Höhe 15.

Zur Ermittlung der ersten Höhe 13 und der zweiten Höhe 15 kann der Zweiradluftreifen 1 in seinem Querschnitt so aufgebogen sein, dass die beiden Karkasseinlagen 6,6' vom Zenitbereich 17 her kommend im Bereich der Seitenwand 3 weitgehend geradlinig angeordnet sind und in eine bezüglich des Kerns 5 weitgehend symmetrische Umschlingung des Kerns 5 übergehen. Es kann sich dabei um einen Ausschnitt des Reifens der Fig. 1 handeln, wobei der Zweiradluftreifen 1 in seinem Querschnitt entsprechend aufgebogen ist.

In dieser Anordnung ist die erste Höhe 13 des radial äußeren Endes 12 des Wulstschutzbandes 8 gemessen relativ zum äußersten Umschlagpunkt 14 einer Außenkante der um den Kern 5 herumgeschlagenen Festigkeitsträger der inneren Karkasseinlage 6' und gemessen parallel zu den weitgehend geradlinig angeordneten Karkasseinlagen 6, 6'.

In dieser Anordnung ist die zweite Höhe 15 der Karkasseinlagenenden 7' gemessen relativ zum äußersten Umschlagpunkt 14 einer Außenkante der um den Kern herumgeschlagenen Festigkeitsträger der inneren Karkasseinlage 6' und gemessen parallel zu den weitgehend geradlinig angeordneten Karkasseinlagen 6, 6'.

### Bezugszeichenliste

- 1: Zweiradluftreifen
- 2: Laufstreifen
- 3: Seitenwand
- 4: Wulstbereich
- 5: Kern
- 6: äußere Karkasseinlage
- 6': innere Karkasseinlage
- 7: Karkasseinlagenende der äußeren Karkasseinlage
- 7': Karkasseinlagenende der inneren Karkasseinlage
- 8: Wulstschutzband
- 9: Gummieinlage
- 10: Reifeninnenraum
- 11: Reifenaußenraum
- 12: radial äußeres Ende des Wulstschutzbandes
- 13: erste Höhe
- 14: äußerster Umschlagpunkt
- 15: zweite Höhe
- 16: inneres Ende
- 17: Zenitbereich
- 18: Gerade

- rR: radiale Richtung
- aR: axiale Richtung
- U: Umlaufrichtung

## Patentansprüche

1. Zweiradluftreifen (1), bevorzugt Fahrradreifen, besonders bevorzugt Rennradreifen (1), mit einem Laufstreifen (2), einer Reifenkarkasse, Reifenseitenwänden (3) und zwei Wulstbereichen (4) mit je einem Reifenwulst mit einem Kern (5),
wobei die Reifenkarkasse zwei Karkasseinlagen (6,6') umfasst,
wobei die zwei Karkasseinlagen (6,6') jeweils einzelne parallel zueinander verlaufende Festigkeitsträger aufweisen, wobei die Festigkeitsträger in einem Winkel zur Umlaufrichtung U von 40 Grad bis 60 Grad angeordnet sind und die Festigkeitsträger der beiden Karkasseinlagen (6, 6') einen gegenläufigen Steigungswinkel aufweisen,
wobei beide Karkasseinlagen (6,6') von einem Zenitbereich (17) des Zweiradluftreifens (1) über die Reifenseitenwände (3) bis in beide Wulstbereiche (4) reichen und dort um den jeweiligen Kern (5) von axial innen nach axial außen herumgeschlagen sind und mit Karkasseinlagenenden (7,7') aufweisend Festigkeitsträgerenden der Karkasseinlage (6,6') enden und wobei die zwei Wulstbereiche (4) als Anscheuerschutz jeweils ein von außen auf der Karkasse angeordnetes Wulstschutzband (8) aufweisen,
**dadurch gekennzeichnet, dass**
die Karkasseinlagenenden (7') der inneren Karkasseinlage (6') vom jeweiligen Wulstschutzband (8) von außen abgedeckt sind, wobei die innere Karkasseinlage (6') durch die im Zenitbereich (17) radial innere Karkasseinlage der beiden Karkasseinlagen (6,6') gebildet ist.

2. Zweiradluftreifen (1) nach Anspruch 1, **dadurch gekennzeichnet, dass** das Wulstschutzband (8) in einem radial äußeren Ende (12) in einer ersten Höhe (13) von maximal 15 mm, bevorzugt von 10 mm bis 12 mm, endet, gemessen relativ zu einem äußersten Umschlagpunkt (14) der um den Kern (8) herumgeschlagenen Festigkeitsträger der inneren Karkasseinlage (6').

3. Zweiradluftreifen (1) nach zumindest einem der vorhergehenden Ansprüche, **dadurch gekennzeichnet, dass**
die Karasseinlagenenden (7') der inneren Karkasseinlage (6') in einer zweiten Höhe (15) von maximal 13 mm, bevorzugt von 8 mm bis 10 mm, angeordnet sind, gemessen relativ zu einem äußersten Umschlagpunkt (14) der um den Kern herumgeschlagenen Festigkeitsträger der inneren Karkasseinlage (6').

4. Zweiradluftreifen (1) nach zumindest einem der vorhergehenden Ansprüche, **dadurch gekennzeichnet, dass**
die Karasseinlagenenden (7') der inneren Karkasseinlage (6') im Wulstbereich (4), insbesondere vom Kern herkommend vor der Seitenwand (3), enden.

5. Zweiradluftreifen (1) nach zumindest einem der vorhergehenden Ansprüche, **dadurch gekennzeichnet, dass**
das Wulstschutzband (8) als gummiertes Band aufweisend Fasern, insbesondere als gummiertes Gewebeband, ausgeführt ist.

6. Zweiradluftreifen (1) nach zumindest einem der vorhergehenden Ansprüche, **dadurch gekennzeichnet, dass**
das Wulstschutzband (8) frei ist von miteinander verdrillten Fasern aufweisenden Fäden, die ein radial äußeres Ende (12) des Wulstschutzbandes (8) und ein inneres Ende (16) des Wulstschutzbandes (8) verbinden.

7. Zweiradluftreifen (1) nach zumindest einem der vorhergehenden Ansprüche, **dadurch gekennzeichnet, dass**
das Wulstschutzband (8) als gummiertes Monofilamentgewebe ausgeführt ist.

8. Zweiradluftreifen (1) nach zumindest einem der vorhergehenden Ansprüche, **dadurch gekennzeichnet, dass**
die Karkasse in direktem Kontakt zum Reifeninnenraum (10) steht.

9. Zweiradluftreifen (1) nach zumindest einem der vorhergehenden Ansprüche, **dadurch gekennzeichnet, dass**
es sich um einen Schlauchlosreifen, insbesondere einen "tubeless" Reifen oder einen "Tubeless Ready" Reifen, handelt.

10. Zweiradluftreifen (1) nach zumindest einem der vorhergehenden Ansprüche, **dadurch gekennzeichnet, dass**
es sich um einen Fahrradreifen für einen Betrieb mit Schlauch, insbesondere um einen Clincher-Reifen, handelt.

11. Zweiradluftreifen (1) nach zumindest einem der vorhergehenden Ansprüche, **dadurch gekennzeichnet, dass**
zumindest in einem Bereich der Seitenwand (3) die beiden Karkasseinlagen (6,6') die einzigen Festigkeitsträger aufweisenden Einlagen sind.

12. Zweiradluftreifen (1) nach zumindest einem der vorhergehenden Ansprüche, **dadurch gekennzeichnet, dass**
die Karkasseinlagenenden (7) der äußeren Karkasseinlage (6) der beiden Karkasseinlagen (6,6') können von der inneren Karkasseinlage (6') oder vom Wulstschutzband (8) von außen abgedeckt sein.

13. Zweiradluftreifen (1) nach zumindest einem der vorhergehenden Ansprüche, **dadurch gekennzeichnet, dass** zwischen dem Laufstreifen (2) und der Reifenkarkasse eine dämpfende Gummieinlage (9) aus einem hochelastischen Kautschuk angeordnet ist, wobei die dämpfende Gummieinlage (9) insbesondere eine Materialdicke zwischen 0,2 mm und 1 mm aufweist, und/oder dass zwischen dem Laufstreifen (2) und der Reifenkarkasse eine Schutzlage (4) aufweisend ein insbesondere reißfestes Gewebe, bevorzugt ein Gewebe aufweisend Fasern aus Polyethylenterephthalat - Polyacrylat, angeordnet ist.

14. Zweiradluftreifen (1) nach zumindest einem der vorhergehenden Ansprüche, **dadurch gekennzeichnet, dass**
es sich um einen Fahrradreifen (1), insbesondere einen Rennradreifen (1), einen Mountain-Bike Reifen oder einen Reifen für ein Fahrrad aufweisend einen Elektromotor zum Antrieb des Fahrrads, handelt.

15. Zweirad aufweisend einen Zweiradluftreifen (1) gemäß zumindest einem der vorhergehenden Ansprüche, wobei es sich um ein Fahrrad, insbesondere um ein Rennrad oder um ein Mountain-Bike oder um ein Fahrrad aufweisend einen Elektromotor zum Antrieb des Fahrrads, insbesondere um ein Rennrad oder um ein Mountain-Bike, handelt und wobei ein von einer Felge und dem Reifen (1) eingeschlossener Reifeninnenraum (10) frei von einem Schlauch ist.

## Claims

1. Two-wheeled vehicle pneumatic tyre (1), preferably bicycle tyre, particularly preferably racing bike tyre (1), having a tread (2), a tyre carcass,
tyre side walls (3) and two bead regions (4) each with a tyre bead with a core (5), wherein the tyre carcass comprises two carcass inlays (6,6'),
wherein the two carcass inlays (6, 6') each have individual reinforcement members running parallel to one another, the reinforcement members being arranged at an angle of 40 degrees to 60 degrees with respect to the direction of rotation U and the reinforcement members of the two carcass inlays (6, 6') having an opposite pitch angle,
wherein the two carcass inlays (6, 6') extend from a zenith region (17) of the two-wheeled vehicle pneumatic tyre (1) over the tyre side walls (3) as far as the two bead regions (4) and are looped there around the respective core (5) from axially on the inside axially outwards and end with carcass inlay ends (7,7') having reinforcement member ends of the carcass inlay (6,6'), and wherein the two bead regions (4) each have, as an anti-chafing guard, a bead protective strip (8) arranged outside the carcass,
**characterized in that**
the carcass inlay ends (7') of the inner carcass inlay (6') are covered from the outside by the respective bead protective strip (8), wherein the inner carcass inlay (6') is formed by that carcass inlay of the two carcass inlays (6, 6') which is the radially inner carcass inlay in the zenith region (17).

2. Two-wheeled vehicle pneumatic tyre (1) according to Claim 1, **characterized in that** the bead protective strip (8) ends at a radially outer end (12) at a first height (13) of at most 15 mm, preferably of 10 mm to 12 mm, as measured relative to an outermost turning point (14) of the reinforcement members of the inner carcass inlay (6') that are looped around the core (8).

3. Two-wheeled vehicle pneumatic tyre (1) according to at least one of the preceding claims, **characterized in that**
the carcass inlay ends (7') of the inner carcass inlay (6')
are arranged at a second height (15) of at most 13 mm, preferably of 8 mm to 10 mm, as measured relative to an outermost turning point (14) of the reinforcement members of the inner carcass inlay (6') that are looped around the core.

4. Two-wheeled vehicle pneumatic tyre (1) according to at least one of the preceding claims, **characterized in that**
the carcass inlay ends (7') of the inner carcass inlay (6') end in the bead region (4), in particular coming from the core in front of the side wall (3).

5. Two-wheeled vehicle pneumatic tyre (1) according to at least one of the preceding claims, **characterized in that**
the bead protective strip (8) is designed as a rubberized strip having fibres, in particular as a rubberized fabric strip.

6. Two-wheeled vehicle pneumatic tyre (1) according to at least one of the preceding claims, **characterized in that**
the bead protective strip (8) is free of threads which have intertwined fibres and connect a radially outer end (12) of the bead protective strip (8) and an inner end (16) of the bead protective strip (8).

7. Two-wheeled vehicle pneumatic tyre (1) according to at least one of the preceding claims, **characterized in that**
the bead protective strip (8) is designed as a rubberized monofilament fabric.

8. Two-wheeled vehicle pneumatic tyre (1) according to at least one of the preceding claims, **characterized in that**
the carcass is in direct contact with the tyre interior (10).

9. Two-wheeled vehicle pneumatic tyre (1) according to at least one of the preceding claims, **characterized in that**
the tyre is a tube-free tyre, in particular a "tubeless" tyre or a "tubeless ready" tyre.

10. Two-wheeled vehicle pneumatic tyre (1) according to at least one of the preceding claims, **characterized in that**
the tyre is a bicycle tyre for operation with a tube, in particular a clincher tyre.

11. Two-wheeled vehicle pneumatic tyre (1) according to at least one of the preceding claims, **characterized in that**
at least in one region of the side wall (3), the two carcass inlays (6, 6') are the only inlays having reinforcement members.

12. Two-wheeled vehicle pneumatic tyre (1) according to at least one of the preceding claims, **characterized in that**
the carcass inlay ends (7) of the outer carcass inlay (6) of the two carcass inlays (6,6') can be covered from the outside by the inner carcass inlay (6') or by the bead protective strip (8).

13. Two-wheeled vehicle pneumatic tyre (1) according to at least one of the preceding claims, **characterized in that** a damping rubber inlay (9) made from a highly elastic rubber is arranged between the tread (2) and the tyre carcass, wherein the damping rubber inlay (9) in particular has a material thickness between 0.2 and 1 mm, and/or **in that** a protective ply (4) comprising a particularly tear-resistant fabric, preferably a fabric comprising fibres made from polyethylene terephthalate - polyacrylate, is arranged between the tread (2) and the tyre carcass.

14. Two-wheeled vehicle pneumatic tyre (1) according to at least one of the preceding claims, **characterized in that**
the tyre is a bicycle tyre (1), in particular a racing bike tyre (1), a mountain bike tyre or a tyre for a bicycle having an electric motor for driving the bicycle.

15. Two-wheeled vehicle having a two-wheeled vehicle pneumatic tyre (1) according to at least one of the preceding claims, the vehicle being a bicycle, in particular a racing bike or a mountain bike, or a bicycle having an electric motor for driving the bicycle, in particular a racing bike or a mountain bike, and wherein a tyre interior (10) enclosed by a rim and the tyre (1) does not have a tube.

## Revendications

1. Pneumatique de deux roues (1), de préférence pneu de bicyclette, de manière particulièrement préférée pneu de vélo de course (1), avec une bande de roulement (2), une carcasse de pneu,
des parois latérales de pneu (3) et deux zones de talon (4) avec chacune un talon de pneu avec un noyau (5),
la carcasse du pneu comprenant deux inserts de carcasse (6, 6'),
les deux inserts de carcasse (6, 6') présentant chacun des supports de résistance individuels s'étendant parallèlement les uns aux autres, les supports de résistance étant agencés selon un angle par rapport à la direction périphérique U de 40 degrés à 60 degrés et les supports de résistance des deux inserts de carcasse (6, 6') présentant un angle d'inclinaison opposé,
les deux inserts de carcasse (6, 6') s'étendant d'une zone zénithale (17) du pneu de deux roues (1), en passant par les parois latérales (3) du pneu, jusque dans les deux zones de talon (4) et y étant repliés autour du noyau respectif (5), de l'intérieur axialement vers l'extérieur axialement, et se terminant par des extrémités d'insert de carcasse (7, 7') présentant des extrémités de support de résistance de l'insert de carcasse (6, 6') et les deux zones de talon (4) présentant chacune, en tant que protection contre le frottement, une bande de protection de talon (8) agencée de l'extérieur sur la carcasse,
**caractérisé en ce que**
les extrémités d'insert de carcasse (7') de l'insert de carcasse intérieur (6') sont recouvertes de l'extérieur par la bande de protection de talon (8) respective, l'insert de carcasse intérieur (6') étant formé par l'insert de carcasse radialement intérieur dans la zone zénithale (17) des deux inserts de carcasse (6, 6').

2. Pneumatique de deux roues (1) selon la revendication 1, **caractérisé en ce que** la bande de protection de talon (8) se termine à une extrémité radialement extérieure (12) à une première hauteur (13) de 15 mm maximum, de préférence de 10 mm à 12 mm, mesurée par rapport à un point de repli le plus extérieur (14) des supports de résistance de l'insert de carcasse intérieur (6') repliés autour du noyau (8).

3. Pneumatique de deux roues (1) selon au moins l'une quelconque des revendications précédentes, **caractérisé en ce que**
les extrémités d'insert de carcasse (7') de l'insert de carcasse intérieur (6') sont agencées à une deuxième hauteur (15) de 13 mm maximum, de préférence de 8 mm à 10 mm, mesurée par rapport à un point de repli le plus extérieur (14) des supports de résistance de l'insert de carcasse intérieur (6') repliés autour du noyau.

4. Pneumatique de deux roues (1) selon au moins l'une quelconque des revendications précédentes, **caractérisé en ce que**
les extrémités d'insert de carcasse (7') de l'insert de carcasse intérieur (6') se terminent dans la zone de talon (4), en particulier en partant du noyau avant de la paroi latérale (3).

5. Pneumatique de deux roues (1) selon au moins l'une quelconque des revendications précédentes, **caractérisé en ce que**
la bande de protection de talon (8) est réalisée sous forme de bande caoutchoutée présentant des fibres, en particulier sous forme de bande de tissu caoutchoutée.

6. Pneumatique de deux roues (1) selon au moins l'une quelconque des revendications précédentes, **caractérisé en ce que**
la bande de protection de talon (8) est exempte de fils présentant des fibres torsadées ensemble, qui relient une extrémité radialement extérieure (12) de la bande de protection de talon (8) et une extrémité intérieure (16) de la bande de protection de talon (8).

7. Pneumatique de deux roues (1) selon au moins l'une quelconque des revendications précédentes, **caractérisé en ce que**
la bande de protection de talon (8) est réalisée sous forme de tissu monofilament caoutchouté.

8. Pneumatique de deux roues (1) selon au moins l'une quelconque des revendications précédentes, **caractérisé en ce que**
la carcasse est en contact direct avec l'espace intérieur du pneu (10).

9. Pneumatique de deux roues (1) selon au moins l'une quelconque des revendications précédentes, **caractérisé en ce**
**qu'**il s'agit d'un pneu sans chambre à air, en particulier d'un pneu "tubeless" ou d'un pneu "tubeless ready".

10. Pneumatique de deux roues (1) selon au moins l'une quelconque des revendications précédentes, **caractérisé en ce**
**qu'**il s'agit d'un pneu de bicyclette destiné à être utilisé avec une chambre à air, en particulier un pneu à talons.

11. Pneumatique de deux roues (1) selon au moins l'une quelconque des revendications précédentes, **caractérisé en ce**
**qu'**au moins dans une zone de la paroi latérale (3), les deux inserts de carcasse (6, 6') sont les seuls inserts présentant des supports de résistance.

12. Pneumatique de deux roues (1) selon au moins l'une quelconque des revendications précédentes, **caractérisé en ce que**
les extrémités d'insert de carcasse (7) de l'insert de carcasse extérieur (6) des deux inserts de carcasse (6, 6') peuvent être recouvertes de l'extérieur par l'insert de carcasse intérieur (6') ou par la bande de protection de talon (8).

13. Pneumatique de deux roues (1) selon au moins l'une quelconque des revendications précédentes, **caractérisé en ce qu'**entre la bande de roulement (2) et la carcasse de pneu est agencée une couche de caoutchouc amortissante (9) en un caoutchouc hautement élastique, la couche de caoutchouc amortissante (9) présentant en particulier une épaisseur de matériau comprise entre 0, 2 mm et 1 mm, et/ou **en ce qu'**entre la bande de roulement (2) et la carcasse de pneu est agencée une couche de protection (4) présentant un tissu en particulier résistant à la déchirure, de préférence un tissu présentant des fibres en polyéthylène téréphtalate - polyacrylate.

14. Pneumatique de deux roues (1) selon au moins l'une quelconque des revendications précédentes, **caractérisé en ce**
**qu'**il s'agit d'un pneu de bicyclette (1), en particulier d'un pneu de vélo de course (1), d'un pneu de VTT ou d'un pneu pour une bicyclette présentant un moteur électrique pour l'entraînement de la bicyclette.

15. Deux-roues présentant un pneumatique (1) de deux-roues selon au moins l'une quelconque des revendications précédentes, dans lequel il s'agit d'une bicyclette, en particulier d'un vélo de course ou d'un VTT, ou d'une bicyclette présentant un moteur électrique pour l'entraînement de la bicyclette, en particulier d'un vélo de course ou d'un VTT, et dans lequel un espace intérieur de pneu (10) enfermé par une jante et le pneu (1) est exempt de chambre à air.
